# EUROPEAN PATENT APPLICATION

(11) **EP 4 223 646 A1**
(43) Date of publication of application: **09.08.2023**
(21) Application number: 23155387.6
(22) Date of filing: 07.02.2023
(51) Int. Cl.: B64D 43/00, B64D 43/02, B64D 45/00, G01C 23/00

(54) **ARTIFICIAL INTELLIGENCE AND/OR MACHINE LEARNING (AI/ML) MONITOR SYSTEMS**

(30) Priority: 07.02.2022 US 202217666303
(71) Applicant: Hamilton Sundstrand Corporation, Charlotte, NC 28217-4578 (US)
(72) Inventor: KRENZ, Michael J., Roscoe, IL, 61073 (US); UNDERWOOD, Darin Michael, Cedar Rapids, IA, 52411 (US)
(74) Representative: Dehns

(57) **Abstract**

An artificial intelligence and/or machine learning (AI/ML) system (100) for an aircraft (200) can include an AI/NΠ, module (101) configured to receive one or more inputs (103a - 103d) from one or more aircraft sensors and/or information systems (105a - 105d). The AI/NΠ, module can be configured to calculate an AI/ML informational output (107) based on the one or more inputs. The AI/NΠ, module can include a non-deterministic model for processing the inputs and outputting the AI/NΠ, informational output.

## Description

### FIELD

This disclosure relates to real-time artificial intelligence and/or machine learning (AI/ML) systems, e.g., for aircraft.

### BACKGROUND

Traditionally, most safety-critical algorithms used in aerospace applications have been forced to be deterministic for certification purposes. Certain algorithms are very complex, and this has led to more complex verification efforts for certification. Indeed, verification can amount to half of the total costs associated with developing functionality for safety critical aerospace applications.

Such conventional methods and systems have generally been considered satisfactory for their intended purpose. However, there is still a need in the art for improvements. The present disclosure provides a solution for this need.

### SUMMARY

An artificial intelligence and/or machine learning (AI/ML) system for an aircraft can include an AI/ML module configured to receive one or more inputs from one or more aircraft sensors and/or information systems. The AI/ML, module can be configured to calculate an AI/ML informational output based on the one or more inputs. The AI/ML module can include a non-deterministic model for processing the inputs and outputting the AI/ML informational output.

In certain embodiments, the AI/ML module is unqualified. However, any suitable qualification for the AI/ML module is contemplated herein.

The one or more inputs can include a plurality of inputs. The AI/ML module can be configured to correlate the plurality of inputs to determine whether an aircraft system or sensor is malfunctioning.

In certain embodiments, the system includes an indicator operatively connected to the AI/ML module. The AI/ML module can be configured to output a warning signal to the indicator if an aircraft information system and/or sensor is determined to be malfunctioning to indicate to crew that there is a malfunctioning information system and/or sensor detected by the AI/ML module.

The AI/ML module can be configured in the aircraft such that the output is advisory only such that the AI/NΠ, module is configured to not affect flight operation such that a failure of the AI/ML module has no impact on safety, aircraft operation, or crew workload. For example, the AI/ML module can be configured for use under DO-178C Design Assurance Level (DAL) E. Any other suitable application is contemplated herein.

In certain embodiments, the one or more inputs can include ground speed, thrust setting, pitch attitude and calculated wind speed, and wherein the AI/ML is configured to correlate the one or more inputs to determine whether there is an error either in a navigation system or in an air data system. Any other suitable inputs for any other suitable application, e.g., as disclosed herein, is contemplated herein.

In accordance with at least one aspect of this disclosure, an aircraft can include an artificial intelligence and/or machine learning (AI/ML) system. The AI/ML system can be any suitable AI/ML system, e.g., disclosed herein (e.g., as described above).

In accordance with at least one aspect of this disclosure, a non-transitory computer readable medium can have computer executable instructions configured to cause a computer to perform a method. The method can include receiving, at an AI/ML module, one or more inputs from one or more aircraft sensors and/or information systems, and calculating, at the AI/ML module, an AI/ML informational output based on the one or more inputs. The AI/ML module can be any suitable AI/ML module, e.g., as disclosed herein (e.g., as described above). Calculating can include using an unqualified non-deterministic model for processing the one or more inputs. The method can include any other suitable method(s) and/or portion(s) thereof.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

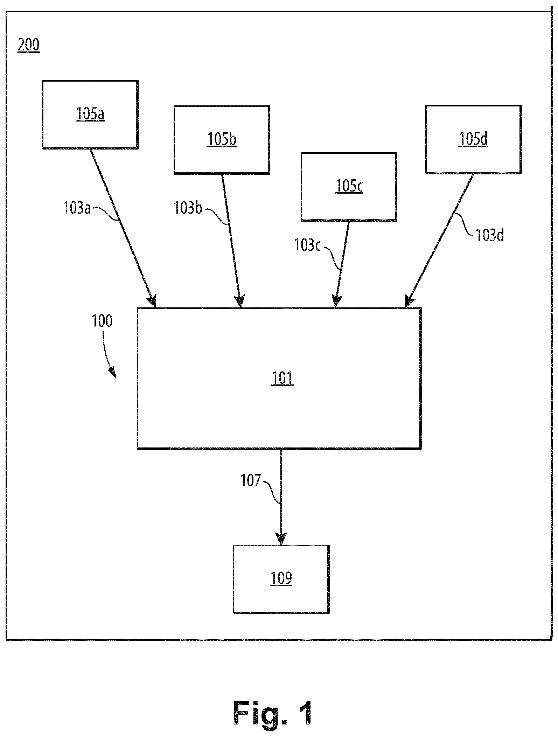

Fig. 1 is a schematic diagram of an embodiment of a system in accordance with this disclosure.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Certain embodiments described herein can be used to provide monitoring and warning systems for aircraft to reduce pilot workload, for example. Any other suitable use is contemplated herein.

An artificial intelligence and/or machine learning (AI/ML) system 100 for an aircraft 200 can include an AI/ML module 101 configured to receive one or more inputs 103a, 103b, 103c, 103d from one or more aircraft sensors and/or information systems 105a, 105b, 105c, 105d. The AI/ML module 101 can be configured to calculate an AI/ML informational output 107 based on the one or more inputs 103a, b, c, d. The AI/ML module 101 can include a non-deterministic model (e.g., as appreciated by those having ordinary skill in the art of AI/ML) for processing the inputs 103 and outputting the AI/ML informational output 107. Any suitable model for any suitable function or combinations thereof for the AI/ML module 101 is contemplated herein (e.g., sensor and/or information system monitoring, condition monitoring, aircraft flight variable coordination for system monitoring, maintenance monitoring systems, etc.). For example, the AI/ML module 101 can be configured to perform a non-safety critical function, such as monitoring and/or advisory information output. The AI/ML module 101 can include any suitable hardware and/or software module(s) configured to perform the disclosed function and/or any other suitable function.

In certain embodiments, the AI/ML module 101 is unqualified (e.g., uncertified by one or more flight authorities for use in control systems on aircraft). However, any suitable qualification for the AI/ML module 101 is contemplated herein. Certain embodiments can be certified under a lower standard (e.g., DAL-E as described below) than safety critical devices.

The one or more inputs 103a, b, c, d can include a plurality of inputs 103a, b, c, d, e.g., as shown. Any suitable number of inputs are contemplated herein. The AI/ML module 101 can be configured to correlate the plurality of inputs 103a, b, c, d to determine whether an aircraft system or sensor (e.g., sensors and/or information systems 105a, b, c, d) is malfunctioning.

In certain embodiments, the system 100 can include an indicator 109 operatively connected to the AI/ML, module 101. In certain embodiments, the AI/ML, module 101 can be configured to output a warning signal to the indicator 109 if an aircraft information system and/or sensor 105a, 105b, 105c, 105d is determined to be malfunctioning to indicate to crew (e.g., a pilot) that there is a malfunctioning information system and/or sensor 105a, 105b, 105c, 105d detected by the AI/ML module 101.

The indicator 109 can be any suitable indicator. For example, the indicator 109 can be a standalone indicator configured to indicate a simple warning signal (e.g., a light). However, the warning signal, for example, can include any suitable data. In certain embodiments, the indicator 109 can be a textual indicator configured to display a warning message or other suitable state message (e.g., describing the issue). The indicator 109 be integrated into a graphical user interface (e.g., as a software component) of a suitable cockpit instrument, for example (e.g., a flight display) and/or be in any suitable location (e.g., near and/or associated with display information for a related device).

The AI/ML module 101 can be configured in the aircraft 200 such that the informational output 107 is advisory only such that the AI/ML module 101 is configured to not affect flight operation such that a failure of the AI/ML module 101 has no impact on safety, aircraft operation, or crew workload. For example, the AI/ML module 101 can be configured for use under DO-178C Design Assurance Level (DAL) E. Any other suitable application is contemplated herein.

In certain embodiments, the one or more inputs 103a, b, c, d can include ground speed, thrust setting, pitch attitude and calculated wind speed. The AI/ML can be configured to correlate the one or more inputs 103a, b, c, d to determine whether there is an error either in a navigation system or in an air data system. Any other suitable inputs for any other suitable application, e.g., as disclosed herein, is contemplated herein.

In accordance with at least one aspect of this disclosure, an aircraft 200 can include an artificial intelligence and/or machine learning (AI/ML) system 100. The AI/ML system 100 can be any suitable AI/ML system, e.g., system 100 disclosed herein (e.g., as described above).

In accordance with at least one aspect of this disclosure, a non-transitory computer readable medium can have computer executable instructions configured to cause a computer to perform a method. The method can include receiving, at an AI/ML module, one or more inputs from one or more aircraft sensors and/or information systems, and calculating, at the AI/ML module, an AI/ML informational output based on the one or more inputs. The AI/ML module can be any suitable AI/ML module, e.g., as disclosed herein (e.g., as described above). Calculating can include using an unqualified non-deterministic model for processing the one or more inputs. The method can include any other suitable method(s) and/or portion(s) thereof.

Certain embodiments only operate to provide warnings (e.g., warnings, caution, or maintenance advisories) as an advisory to the crew. In certain embodiments, the AI/ML systems can find immediate use for non-interference systems that do not require certification (e.g., for real-time use and/or otherwise). However, certified/qualified systems are contemplated herein (e.g., utilizing a deterministic module that is certified to check output of an uncertified AI/ML module).

Embodiments utilize Artificial Intelligence/Machine Learning (AI/ML) to monitor other systems and/or sensors onboard the aircraft. An AI/ML algorithm can be used to cross-check/correlate the performance of systems against sensed values. This type of application does not require certification beyond "non-interference", referred to as a DAL E application (DAL is Design Assurance Level defined in RTCA DO-178C). DAL E describes hardware whose failure or malfunction would have no effect on the aircraft's operational capability or pilot workload. DAL E is the no-effect standard such that failure of a DAL E device has no impact on safety, aircraft operation, or crew workload.

AI/ML methods can be used to compare or analyze the outputs of a system or sensor and trigger a comparator warning or irregularity warning alerting the crew of a possible issue. For example, if the ground speed, thrust setting and pitch attitude do not correlate with the calculated wind speed, the AI/ML module can warn the crew that there could be an error either in the navigation system or in the air data system. Embodiments can include any suitable models having any suitable complexity. For example, embodiments may take into account multiple PVT solutions and isolate the irregularity to either the navigation system OR the air data system.

Embodiments can be applied to fuel management, C.G. management, hydraulic/pneumatic monitoring, landing gear stress, actual braking action, takeoff acceleration and RVSM compliance and alerting. Any other suitable application is contemplated herein.

For example, embodiments can be applied to fuel management. Embodiments can compare fuel consumption, e.g., from a FADEC, by the engines to fuel tank quantity, inerting system performance, and provide C.G. calculations based upon trim as fuel burns off. Embodiments can also be used to spot fuel leaks that are not apparent, e.g., where only a pilot would have noticed through cross-checking various sources.

Certain embodiments can be applied to C.G. management. For example, embodiments can recommend fuel transfer for optimal trim to avoid trim drag and compare trim position to calculated/measured weight values to determine actual C.G. location.

Certain embodiments can be applied to Hydraulic/Pneumatic system. For example, embodiments can monitor reaction times of controlled items, pressure changes, etc. to ascertain presence of contaminants or overall performance of system (e.g. leaky seals, pump failures, etc.).

Certain embodiments can be applied to Landing Gear Stress. For example, embodiments can take in vertical accelerometer data, RADALT (radar altimeter) rate of descent data, tire pressure data, and yaw loads and monitor/output a state of the landing gear.

Certain embodiments can be applied to actual braking action. For example, embodiments can monitor brake application, temperature of heat sinks, thrust reversers, runway length remaining, etc. Embodiments can also be used to optimize brake wear or balance brake wear against landing distance, for example.

Certain embodiments can be applied to Takeoff performance. For example, embodiments can monitor thrust application, as well as aerodynamic force on flaps compared to airspeed/groundspeed and AOA.

Certain embodiments can be applied to RVSM/altitude compliance. For example, embodiments can conduct a RADALT comparison to barometric altitude during approach/departure, engine FADEC sensors vs aircraft sensors, and barometric setting vs known altitude on airport during taxi to determine/output a reading as to the compliance of altitude readings.

Embodiments can enables the use of artificial intelligence and machine learning in aerospace applications. Humans are terrible system monitors, and embodiments of AI/NΠ, can enable the machine to monitor the aircraft systems/sensors in such a way as to provide alerts for possible malfunctions aiding the pilot but not taking direct action, for example. Embodiments can provide a method for certifying AI/ML in aerospace for monitoring functions.

Embodiments can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein, that fall within the scope of the claims, as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. An artificial intelligence and/or machine learning, AI/ML, system for an aircraft, comprising:
an AI/ML module (101) configured to:
receive a plurality of inputs (103a - 103d) from one or more aircraft sensors and/or information systems (105a - 105d);
calculate an AI/ML informational output (107) based on the plurality of inputs, wherein the AI/ML module includes a non-deterministic model for processing the inputs and outputting the AI/ML informational output; and
correlate the plurality of inputs to determine whether an aircraft system or sensor is malfunctioning;
an indicator (109) operatively connected to the AI/ML module, wherein the AI/ML module is configured to output a warning signal to the indicator if an aircraft information system and/or sensor is determined to be malfunctioning to indicate to crew that there is a malfunctioning information system and/or sensor detected by the AI/ML module, wherein the AI/ML module is configured in the aircraft such that the output is advisory only such that the AI/ML module is configured to not affect flight operation such that a failure of the AI/ML module has no impact on safety, aircraft operation, or crew workload, such that the AI/ML module is configured for use under DO-178C Design Assurance Level, DAL, E.

2. The system of claim 1, wherein the AI/ML module is unqualified.

3. The system of claim 1 or 2, wherein the one or more inputs include ground speed, thrust setting, pitch attitude and calculated wind speed, and wherein the AI/ML is configured to correlate the one or more inputs to determine whether there is an error either in a navigation system or in an air data system.

4. An artificial intelligence and/or machine learning, AI/ML, system for an aircraft, comprising:
an AI/ML module (101) configured to:
receive one or more inputs (103a - 103d) from one or more aircraft sensors and/or information systems (105a - 105d); and
calculate an AI/ML, informational output (107) based on the one or more inputs, wherein the AI/ML module includes a non-deterministic model for processing the inputs and outputting the AI/ML informational output.

5. The system of claim 4, wherein the AI/ML module is unqualified.

6. The system of claim 4 or 5, wherein the one or more inputs includes a plurality of inputs.

7. The system of claim 6, wherein the AI/ML module is configured to correlate the plurality of inputs to determine whether an aircraft system or sensor is malfunctioning.

8. The system of claim 6 or 7, wherein the system includes an indicator operatively connected to the AI/ML module.

9. The system of claim 8, wherein the AI/ML module is configured to output a warning signal to the indicator if an aircraft information system and/or sensor is determined to be malfunctioning to indicate to crew that there is a malfunctioning information system and/or sensor detected by the AI/ML module.

10. The system of claim 4, wherein the AI/ML module is configured in the aircraft such that the output is advisory only such that the AI/ML module is configured to not affect flight operation such that a failure of the AI/ML module has no impact on safety, aircraft operation, or crew workload.

11. The system of claim 10, wherein the AI/ML module is configured for use under DO-178C Design Assurance Level, DAL, E.

12. The system of claim 9, 10 or 11, wherein the one or more inputs include ground speed, thrust setting, pitch attitude and calculated wind speed, and wherein the AI/ML is configured to correlate the one or more inputs to determine whether there is an error either in a navigation system or in an air data system.

13. A non-transitory computer readable medium having computer executable instructions configured to cause a computer to perform a method, the method comprising:
receiving, at an AI/ML module, one or more inputs from one or more aircraft sensors and/or information systems; and
calculating, at the AI/ML module, an AI/ML informational output based on the one or more inputs, wherein the AI/ML module includes a non-deterministic model for processing the inputs and outputting the AI/ML informational output.

14. The non-transitory computer readable medium of claim 13, wherein calculating includes using an unqualified non-deterministic model for processing the one or more inputs.
